# EUROPÄISCHE PATENTSCHRIFT

(11) **EP 2 080 240 B1**
(45) Veröffentlichungstag und Bekanntmachung des Hinweises auf die Patenterteilung: **09.06.2010**
(21) Anmeldenummer: 07846277.7
(22) Anmeldetag: 25.10.2007
(51) Int. Cl.: H01M 2/20

(54) **BATTERIE UND VERFAHREN ZUM HERSTELLEN EINER BATTERIE**
BATTERY, AND METHOD FOR THE PRODUCTION OF A BATTERY
BATTERIE ET PROCÉDÉ DE FABRICATION D'UNE BATTERIE

(30) Priorität: 09.11.2006 DE 102006053172
(43) Veröffentlichungstag der Anmeldung: 22.07.2009
(73) Patentinhaber: VB Autobatterie GmbH & Co. KGaA, 30419 Hannover (DE)
(72) Erfinder: OLDENBURG, Dirk, 30952 Ronnenberg (DE); STREUER, Peter, 30559 Hannover (DE)
(74) Vertreter: Plöger, Jan Manfred
(86) Internationale Anmeldenummer: PCT/DE2007/001942
(87) Internationale Veröffentlichungsnummer: WO 2008/055472

(56) Entgegenhaltungen:
- EP-A- 0 834 943
- EP-A- 1 691 431
- JP-A- 1 007 469

## Beschreibung

Die Erfindung betrifft eine Batterie, insbesondere einen Bleiakkumulator, mit mindestens einem Batteriezellenverbindungselement, das einen mindestens eine Seitenfläche aufweisenden Verbinder zum Verbinden mit mindestens einer Platte an einer Unterseite des Verbinders und eine Schweißlasche, die mit dem Verbinder elektrisch leitend verbunden ist und eine von einer Berandung begrenzte Ausnehmung aufweist, umfasst. Gemäß einem zweiten Aspekt betrifft die Erfindung ein Verfahren zur Herstellung einer Batterie, insbesondere eines Bleiakkumulators.

Batterien in Form von Bleiakkumulatoren werden beispielsweise als Starterbatterie in einem Automobil verwendet. Eine derartige Batterie besteht aus mehreren galvanischen Zellen, die in Reihe geschaltet sind und voneinander durch eine elektrisch isolierende Trennwand getrennt sind. Jede der galvanischen Zellen umfasst einen positiven und einen negativen Plattensatz, die beide jeweils aus mehreren Platten aufgebaut sind. Das Batteriezellenverbindungselement verbindet die Platten eines Plattensatzes untereinander elektrisch und mechanisch und dient zusätzlich dazu, den Plattensatz einer galvanischen Zelle über ein weiteres Batteriezellenverbindungselement mit einem anderen Plattensatz einer anderen galvanischen Zelle durch die Trennwand hindurch elektrisch zu kontaktieren.

Um einen solchen elektrischen Kontakt zu ermöglichen, werden bei der Fertigung der Batterie die Batterieverbindungselemente relativ zueinander und relativ zu einer Ausnehmung in der Trennwand ausgerichtet. Anschließend wird mit einer heißen Zange Material des Batteriezellenverbindungselementes in der Umgebung der Ausnehmung aufgeschmolzen, so dass ein Teil des geschmolzenen Materials durch die Ausnehmung in der Trennwand fließt und sich ein elektrischer Kontakt zwischen den beiden Batteriezellenverbindungselementen bildet. Dabei entsteht in dem Batteriezellenverbindungselement eine von einer Berandung begrenzte Ausnehmung bzw. Vertiefung.

Bei Bleiakkumulatoren besteht der Verbinder in der Regel aus Blei. Die Zange weist an den Stellen, an denen sie mit den Batteriezellenverbindungselementen in Kontakt kommt, Schweißplättchen auf. Die Schweißplättchen sind wie die Ausnehmung entweder rund oder oval ausgebildet, da so das Verbinden von zwei Batteriezellenverbindungselementen durch die Trennwand hindurch prozesssicher durchgeführt werden kann.

Derartige Batterien weisen in der Regel nur Spannungen zwischen 6 V und 48 V auf. In modernen Kraftfahrzeugen werden jedoch hohe Leistungen bis zu mehreren Kilowatt benötigt, so dass unter Last große Ströme durch die Batteriezellenverbindungselemente fließen. Bei derartigen Strömen kommt es aufgrund des Innenwiderstands der Batterie zu einer unerwünschten Erwärmung, was nachteilig ist. Der Innenwiderstand der Batterie begrenzt zudem nachteiligerweise die maximale Leistung, die von der Batterie abgegeben werden kann.

Der Erfindung liegt die Aufgabe zugrunde, Nachteile im Stand der Technik zu überwinden.

Die Erfindung löst das Problem durch eine gattungsgemäße Batterie, bei der die Berandung der Ausnehmung des Batteriezellenverbindungselements an einem der Seitenfläche des Verbinders benachbarten Abschnitt einen Verlauf aufweist, der einer Kontur der Seitenfläche des Verbinders entspricht. Insbesondere weist die Berandung einen Verlauf auf, der der Kontur der Seitenfläche an einer Stelle entspricht, die dem Abschnitt benachbart ist.

Gemäß einem zweiten Aspekt löst die Erfindung das Problem durch ein Verfahren mit den Merkmalen von Anspruch 16.

Durch ein derartiges Batteriezellenverbindungselement wird vorteilhafterweise erreicht, dass ein elektrischer Strom, der von einer Platte durch den Verbinder und die Schweißlasche durch die Trennwand zu einem weiteren Batteriezellenverbindungselement fließt, innerhalb der Schweißlasche einen vom Strompfad im Wesentlichen unabhängigen Widerstand erfährt. Hieraus resultiert eine flächenbezogene Stromdichte, die über den Teil der Berandung im Wesentlichen gleich ist, der der Kontur der Oberseite des Verbinders entspricht. Dadurch wird das für die elektrische Leitung des Stroms zur Verfügung stehende Material der Schweißlasche optimal für den Stromfluss genutzt, so dass ein reduzierter Innenwiderstand erreichbar ist. Das reduziert die unerwünschte Erwärmung der Batterie während des Betriebs und ermöglicht eine höhere Leistungsabgabe der Batterie.

Ist ein maximal akzeptabler Innenwiderstand vorgegeben, so ermöglicht die Erfindung alternativ eine Einsparung an Material, aus dem die Schweißlasche besteht, beispielsweise an Blei.

Vorteilhaft ist zudem, dass die Erfindung ein prozesssicheres Verbinden der Batteriezellenverbindungselemente erlaubt.

Im Rahmen der vorliegenden Beschreibung wird unter einer Seitenfläche insbesondere jede Fläche verstanden, die den Verbinder begrenzt. Des Weiteren wird unter einer Kontur insbesondere die makroskopische geometrische Form der Oberfläche der Seitenfläche verstanden. Es ist nicht notwendig, dass die Kontur eine Struktur besitzt. Auch eine makroskopisch ebene Oberseite weist eine Kontur auf, nämlich eine flächige bzw. ebene. Es ist zudem nicht notwendig, dass die Berandung überall dort, wo sie zu der Seitenfläche des Verbinders benachbart verläuft, der Kontur der Seitenfläche entspricht. Es ist insbesondere möglich, dass die Berandung an mehreren, voneinander getrennten und der Oberseite des Verbinders benachbarten Abschnitten der Konturen der Oberseite des Verbinders entspricht.

In einer bevorzugten Ausführungsform verläuft die Berandung abschnittsweise gradlinig. Das ist insbesondere für den Fall vorteilhaft, dass die Kontur der Seitenfläche des Verbinders ebenfalls abschnittsweise gradlinig verlaufende Bereiche aufweist. Besonders bevorzugt weist die Ausnehmung eine im Wesentlichen polygonale, insbesondere eine im Wesentlichen dreieckige Grundfläche auf.

In einer besonders bevorzugten Ausführungsform verläuft die Berandung in einem der Seitenfläche des Verbinders benachbarten Abschnitt im Wesentlichen äquidistant zu der Kontur der Seitenfläche. Das wird beispielsweise dadurch erreicht, dass dann, wenn die Ausnehmung eine im Wesentlichen polygonale Grundfläche hat, eine Seite des Polygons zu der benachbarten Seitenfläche des Verbinders ausgerichtet ist. Insbesondere kann eine Seite des Polygons zu einer Oberseite oder zu einer Seitenfläche des Verbinders ausgerichtet sein und insbesondere parallel dazu verlaufen.

Wenn die Schweißlasche eine konstante Dicke aufweist, wird so erreicht, dass der elektrische Widerstand unabhängig vom Stromleitungsweg ist. Darunter, dass die Berandung "im Wesentlichen" äquidistant zu der Kontur der Seitenfläche verläuft, ist zu verstehen, dass eine streng mathematische Äquidistanz nicht notwendig ist. Es ist insbesondere ausreichend, wenn die Berandung von der strengen mathematischen Äquidistanz so abweicht, dass der Innenwiderstand um weniger als 5% über dem Wert liegt, der bei strenger mathematischer Äquidistanz erreicht würde.

Besonders bevorzugt verläuft die Berandung in im Wesentlichen allen zu der Oberseite des Verbinders benachbarten Abschnitten im Wesentlichen äquidistant zu der Kontur der Oberseite. Vorteilhaft hieran ist, dass ein besonders geringer Innenwiderstand einer Batterie mit einem derartigen Batteriezellenverbindungselement erreichbar ist.

In einem bevorzugten Verfahren ist das Verbinden ein Verschweißen, wobei beim Verschweißen die Berandung an einem der Seitenfläche des Verbinders benachbarten Abschnitt nach unten weist. Vorteilhaft daran ist, dass sich Lunker nicht oder nur an wenig störenden Stellen bilden können. Beim Verschweißen steigen eventuell eingeschlossene Luftblasen nämlich nach oben und sammeln sich damit an einer Stelle, die von dem der Seitenfläche benachbarten Abschnitt maximal entfernt ist und an der beim Betrieb der Batterie nur eine geringe Stromdichte anliegt.

Besonders bevorzugt ist ein Verfahren, bei dem die Berandung zusätzlich zwei aneinander angrenzende, geradlinig verlaufende Abschnitte aufweist, die miteinander eine Ecke bilden und bei dem beim Verbinden der beiden Batteriezellenverbindungselemente die Ecke den höchstliegenden Punkt der Ausnehmung darstellt. Diese Ecke liegt bevorzugt von der Seitenfläche des Verbinders abgewandt. In diesem Fall konzentrieren sich etwaige aufsteigende Luftblasen in der Ecke, kombinieren zu größeren Luftblasen und entweichen besonders schnell. Es wird so eine besonders geringe Lunkerdichte erreicht.

Im Folgenden wird die Erfindung anhand der Zeichnungen näher erläutert. Dabei zeigt
- Figur 1: eine erfindungsgemäße Batterie mit einem Batteriezellenverbindungselement gemäß einer ersten Ausführungsform der Erfindung,
- Figur 2: ein Batteriezellenverbindungselement nach dem Stand der Technik,
- Figur 3: ein Batteriezellenverbindungselement einer erfindungsgemäßen Batterie gemäß einer zweiten Ausführungsform der Erfindung und
- Figur 4: ein Batteriezellenverbindungselement einer erfindungsgemäßen Batterie gemäß einer dritten Ausführungsform der Erfindung.

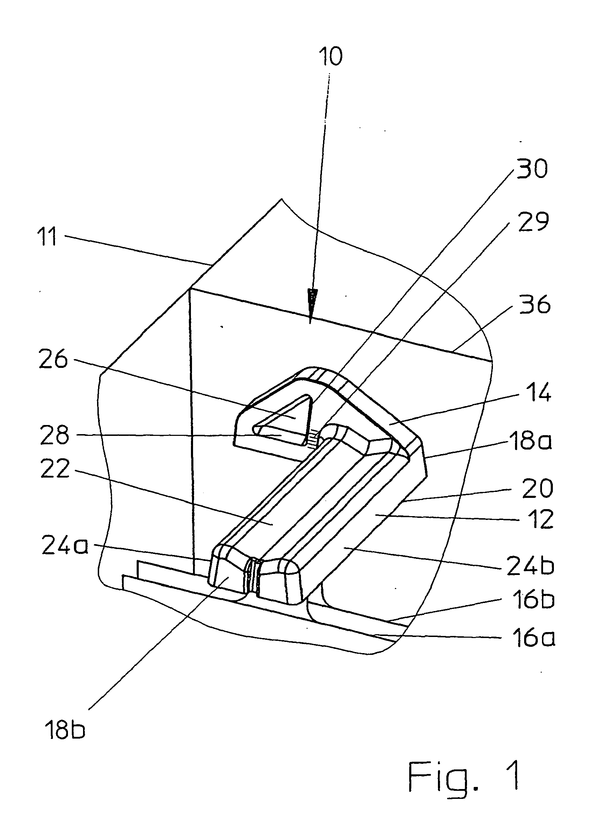

Figur 1 zeigt ein Batteriezellenverbindungselement 10 einer schematisch eingezeichneten Batterie 11 in Form eines Blei-Säure-Akkumulators für einen Personenkraftwagen, das einen Verbinder 12 und eine Schweißlasche 14 aufweist. Der Verbinder 12 und die Schweißlasche 14 werden gleichzeitig in einem Gießverfahren hergestellt, so dass das Batteriezellenverbindungselement 10 einstückig ausgeführt ist. An dem Batteriezellenverbindungselement 10 sind unten Platten 16a, 16b, ... angeordnet, die in Figur 1 ebenfalls schematisch eingezeichnet sind. In der gesamten Beschreibung ist die Raumrichtung "unten" die Richtung, in die die Platten 16a, 16b, ... weisen. Entsprechend ist die Oberseite 22 des Verbinders 12 diejenige Seite, die den Platten 16a, 16b, ... abgewandt liegt. Die Platten 16a, 16b, ... werden während der Fertigung der Batterie durch einen Fahnenangieß- (Cast on strap-, COS-) Prozess mit dem Verbinder 12 verbunden.

Der Verbinder 12 hat eine im Wesentlichen quaderförmige Gestalt und weist als seinen Seitenflächen zwei Querseiten 18a, 18b, eine Unterseite 20, eine Oberseite 22 und zwei Längsseiten 24a, 24b auf.

Die Längsseiten 24a, 24b und die Querseite 18b sind gegenüber der Unterseite 20 um einen Winkel von 7° geneigt, um das Batteriezellenverbindungselement 10 nach seiner Herstellung durch Gießen leicht entformen zu können.

Die Oberseite 22 des Verbinders 12 hat eine im Wesentlichen V-förmige Kontur. Die Schweißlasche 14 ist an der Querseite 18a des Verbinders 12 angeordnet und weist eine Ausnehmung 26 auf. Die Ausnehmung 26 besitzt eine Berandung 28 und befindet sich seitlich neben der Projektionsfläche, die durch die Projektion des Querschnitts des Verbinders 12 in dessen Längsrichtung auf die Schweißlasche 14 erhalten wird. In Figur 1 entspricht diese Projektionsfläche derjenigen Fläche, an der der Verbinder 12 in Kontakt mit der Schweißlasche 14 steht. Die Ausnehmung 26 ist zudem teilweise oberhalb dieser Projektionsfläche angeordnet.

In einem Abschnitt 30, der der Längsseite 24a des Verbinders 12 benachbart liegt, weist die Berandung 28 einen Verlauf auf, der geradlinig ist und damit der Kontur der ebenfalls gradlinig verlaufenden Längsseite 24a des Verbinders 12 entspricht.

Ein elektrischer Strom, der von einer der Platten 16a, 16b, ... durch den Verbinder 12 auf die Berandung 28 der Ausnehmung 26 zufließt, erfährt in dem in Figur 1 gestrichelt eingezeichneten Bereich 29 der Schweißlasche 14 einen von dem Stromflusspfad im Wesentlichen unabhängigen elektrischen Widerstand. Der Grund hierfür ist, dass die Berandung der Kontur der Längsseite 24a folgt, so dass der Abstand zwischen der Berandung 28 und der Längsseite 24 in dem Bereich 29 konstant ist. Unter dem Abstand wird, wie gewöhnlich, die Verbindungslinie zwischen zwei Punkten mit minimaler Länge verstanden.

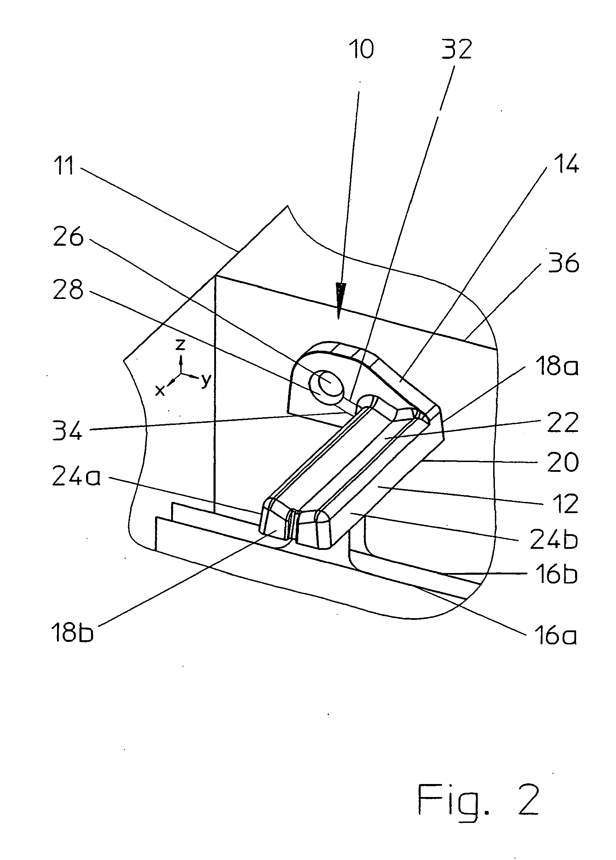

Figur 2 zeigt ein Batteriezellenverbindungselement nach dem Stand der Technik, das eine runde Ausnehmung 26 aufweist. Anders als bei dem in Figur 1 gezeigten Batteriezellenverbindungselement 10 existiert bei dem in Figur 2 gezeigten Batteriezellenverbindungselement kein Abschnitt der Berandung 28, der einen Verlauf aufweist, der der Kontur der Seitenfläche 24a entspricht. Daraus folgt, dass der elektrische Widerstand, den elektrischer Strom auf seinem Weg zu der Berandung 28 zu überwinden hat, vom Stromleitungsweg abhängig ist. So ist ein erster Stromleitungsweg 32, der von der Längsseite 24a ausgeht, länger als ein zweiter, in Figur 2 vom Verbinder 12 teilweise verdeckter Stromleitungsweg 34, der ebenfalls von der Längsseite 24a ausgeht. Aus diesem Grund konzentriert sich der elektrische Strom in der Nähe des ersten Stromleitungswegs 32, was zu einem erhöhten Innenwiderstand einer Batterie führt, in der ein Batteriezellenverbindungselement 10 nach dem Stand der Technik (vgl. Fig. 2) verwendet wird.

Eine erfindungsgemäße Batterie 11, wie sie in Figur 1 gezeigt ist, weist gegenüber einer Batterie mit einem Batteriezellenverbindungselement nach Figur 2 bei gleicher Menge an Blei einen um 5% niedrigeren Innenwiderstand auf.

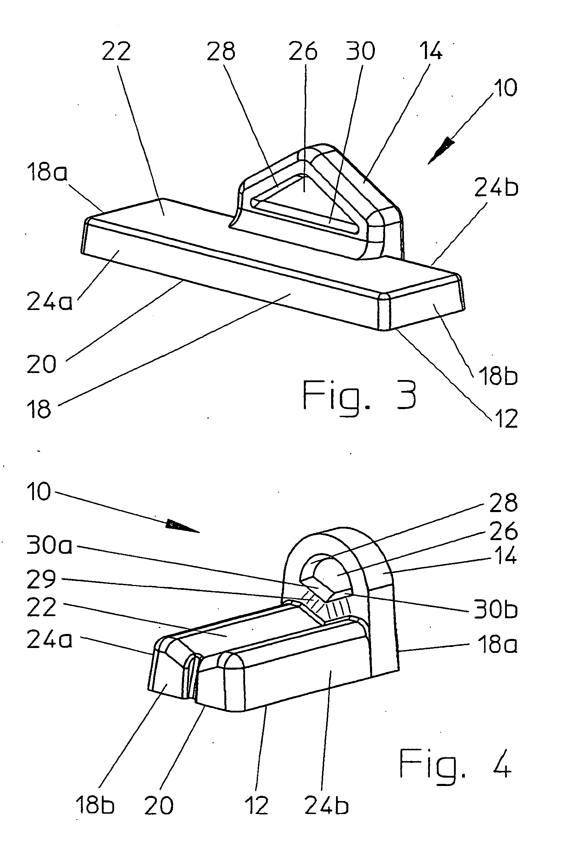

Figur 3 zeigt eine zweite Ausführungsform eines Batteriezellenverbindungselementes 10, bei dem die Schweißlasche 14 an der Längsseite 24b des Verbinders 12 angeordnet ist. Diese Ausführungsform wird beispielsweise in Batterien von Nutzkraftwagen eingesetzt. Die Berandung 28 weist an dem der Oberseite 22 benachbarten Abschnitt 30 einen Verlauf auf, der der ebenen Kontur der Oberseite 22 des Verbinders 12 entspricht. Die Berandung 28 der Ausnehmung 26 verläuft in allen zu der Seitenfläche des Verbinders 12 benachbarten Abschnitten, nämlich dem parallel zu der Oberseite 22 verlaufenden Abschnitt 30, äquidistant zu der Kontur der Oberseite 22. Hierdurch wird sichergestellt, dass egal an welcher Stelle ein elektrischer Strom zwischen dem Abschnitt 30 und der Oberseite 22 des Verbinders 12 durch die Schweißlasche 14 tritt, er stets den gleichen elektrischen Widerstand erfährt. Die Schweißlasche 14 ist also so ausgebildet, dass dann, wenn ein Strom von einer mit dem Verbinder 12 verbundenen Platte 16a, 16b, ... ausgehend durch die Berandung 28 fließt, die flächenbezogene Stromdichte in dem der Oberseite 22 des Verbinders 12 benachbarten Abschnitt 30 der Berandung im Wesentlichen konstant ist. Beispielsweise sind die Unterschiede der flächenbezogenen Stromdichten in dem Abschnitt kleiner als 10 %.

Figur 4 zeigt eine weitere Ausführungsform eines erfindungsgemäßen Batteriezellenverbindungselementes 10. In dieser Ausführungsform ist die Schweißlasche 14 an der Querseite 18a des Verbinders 12 angeordnet. Die Oberseite 22 des Verbinders 12 besitzt eine im Wesentlichen V-förmige Kontur. Die Berandung 28 weist in zwei der Oberseite 22 des Verbinders 12 benachbarten Abschnitten 30a, 30b einen Verlauf auf, der dieser V-förmigen Kontur der Oberseite 22 entspricht. In dem schraffiert eingezeichneten Bereich 29 ergibt sich erneut ein vom Stromleitungspfad unabhängiger spezifischer elektrischer Widerstand.

Zur Herstellung einer erfindungsgemäßen Batterie 11 werden zwei noch keine Ausnehmungen 26 aufweisende, mit Platten 16a, 16b, ... versehene Batteriezellenverbindungselemente 10 beidseits einer in Figur 1 schematisch eingezeichneten, isolierenden Trennwand 36 angeordnet. Die Trennwand 36 weist eine Ausnehmung auf, die in ihrer Grundfläche der später entstehenden Ausnehmung 26 entspricht. Die beiden beidseits angeordneten Batteriezellenverbindungselemente 10 sind werden dabei spiegelsymmetrisch zu der Trennwand 36 angeordnet.

Zum Zwecke der Montage der Batteriezellenverbindungselemente 10 an der Trennwand 36 sind an einer (nicht eingezeichneten) Zange Schweißplättchen vorhanden, die die gleiche Form haben wie die später entstehenden Ausnehmungen 26. Im in Figur 1 gezeigten Fall haben die Schweißplättchen eine polygonale, nämlich dreieckige Form.

Die beiden Batteriezellenverbindungselemente 10 werden zur Montage so angeordnet, dass der Verbinder nach unten weist. Beim Zufahren der Zange wird das Schweißplättchen erhitzt und mit den Schweißlaschen 14 in der Umgebung der Ausnehmung in der Trennwand 36 in Kontakt gebracht. Durch die hohe Temperatur der Zange schmilzt Material der Schweißlasche 14 (in der Regel handelt es sich um Blei) und fließt durch die Ausnehmung in der Trennwand 36. Dadurch wird eine metallische Verbindung zwischen den beidseits der Trennwand angeordneten Batteriezellenverbindungselementen 10 hergestellt.

Etwaige eingeschlossene Luftbläschen steigen nach oben und sammeln sich an der in Figur 1 rechten oberen Ecke der Ausnehmung 26. Ein Großteil der Luftbläschen verbindet sich zu größeren Luftblasen und entweicht in die Atmosphäre. Sollten noch Luftbläschen verbleiben, so können sich Lunker bilden. Diese Lunker befinden sich jedoch in der vom Verbinder 12 maximal beabstandeten Ecke der Ausnehmung 26. Ein elektrischer Strom, der von den Platten 16a, 16b, ... kommend durch die Trennwand 36 zu dem in Figur 1 nicht eingezeichneten, auf der gegenüber liegenden Seite angeordneten Batteriezellenverbindungselement fließt, weist in dieser Ecke nur eine sehr kleine Stromdichte auf. Etwaige Lunker beeinträchtigen den Strom daher nur auf vernachlässigbare Weise.

Durch das beschriebene Vorgehen wird, da kaum Lunker vorhanden sind, zudem eine besonders feste Verbindung zwischen den beiden Batteriezellenverbindungselementen erreicht.

### Bezugszeichenliste

- 10: Batteriezellenverbindungselement
- 11: Batterie
- 12: Verbinder
- 14: Schweißlasche
- 16a, 16b: Platte
- 18a, 18b: Querseite
- 20: Unterseite
- 22: Oberseite
- 24a, 24b: Längsseite
- 26: Ausnehmung
- 28: Berandung
- 29: Bereich
- 30: Abschnitt
- 32: erster Stromleitungsweg
- 34: zweiter Stromleitungsweg
- 36: Trennwand

## Patentansprüche

1. Batterie, insbesondere Bleiakkumulator, mit mindestens einem Batteriezellenverbindungselement (10), das
a) einen mindestens eine Seitenfläche (22, 24a, 24b) aufweisenden Verbinder (12) zum Verbinden mit mindestens einer Platte (16a, 16b) an einer Unterseite (20) des Verbinders (12) und
b) eine Schweißlasche (14), die mit dem Verbinder (12) elektrisch leitend verbunden ist und eine von einer Berandung (28) begrenzte Ausnehmung (26) aufweist,
umfasst, **dadurch gekennzeichnet, dass** die Berandung (28) in einem der Seitenfläche (22, 24a, 24b) des Verbinders (12) benachbarten Abschnitt (30) einen Verlauf aufweist, der einer Kontur der Seitenfläche (22, 24a, 24b) des Verbinders (12) entspricht.

2. Batterie nach Anspruch 1, **dadurch gekennzeichnet, dass** die Berandung (28) abschnittsweise geradlinig verläuft.

3. Batterie nach einem der vorstehenden Ansprüche, **dadurch gekennzeichnet, dass** die Berandung (28) zwei aneinander angrenzende, geradlinig verlaufende Abschnitte (30a, 30b) aufweist.

4. Batterie nach einem der vorstehenden Ansprüche, **dadurch gekennzeichnet, dass** die Berandung (28) in einem der Seitenfläche (22, 24a, 24b) des Verbinders (12) benachbarten Abschnitt (30) im Wesentlichen äquidistant zu der Kontur der Seitenfläche (22, 24a, 24b) verläuft.

5. Batterie nach Anspruch 4, **dadurch gekennzeichnet, dass** die Berandung (28) in allen zu den der Seitenfläche (22, 24a, 24b) des Verbinders (12) benachbarten Abschnitten (30) im Wesentlichen äquidistant zu der Kontur der Seitenfläche (22, 24a, 24b) verläuft.

6. Batterie nach einem der vorstehenden Ansprüche, **dadurch gekennzeichnet, dass** der Verbinder (12) eine im Wesentlichen quaderförmige Gestalt hat und die Schweißlasche (14) an einer Querseite (18a, 18b) des Verbinders (12) angeordnet ist.

7. Batterie nach Anspruch 6, **dadurch gekennzeichnet, dass** die Ausnehmung (26) seitlich neben der Projektionsfläche angeordnet ist, die durch Projektion des Querschnitts des Verbinders (12) in dessen Längsrichtung auf die Schweißlasche (14) erhalten wird.

8. Batterie nach Anspruch 6 und/oder 7, **dadurch gekennzeichnet, dass** die Ausnehmung (26) oberhalb der Projektionsfläche angeordnet ist, die durch Projektion des Querschnitts des Verbinders (12) in dessen Längsrichtung auf die Schweißlasche (14) erhalten wird.

9. Batterie nach einem der Ansprüche 1 bis 5, **dadurch gekennzeichnet, dass** der Verbinder (12) eine im Wesentlichen quaderförmige Gestalt hat und die Schweißlasche (14) an einer Längsseite (24a, 24b) des Verbinders (12) angeordnet ist.

10. Batterie nach einem der vorstehenden Ansprüche, **gekennzeichnet durch** zwei **durch** eine elektrisch isolierende Trennwand (36) voneinander getrennte und zu der Trennwand (36) spiegelsymmetrische Batteriezellenverbindungselemente (10), die **durch** eine in der Trennwand (36) vorgesehene Trennwand-Ausnehmung elektrisch miteinander verbunden sind.

11. Batterie nach einem der vorstehenden Ansprüche, **dadurch gekennzeichnet, dass** an der Unterseite (20) des Verbinders (12) mindestens eine Platte (16a, 16b) angeformt ist.

12. Verfahren zum Herstellen einer Batterie (11), insbesondere eines Bleiakkumulators, mit den Schritten:
(i) Anordnen von zwei Batteriezellenverbindungselementen (10) beidseits einer Trennwand (36), wobei jedes Batteriezellenverbindungselement (10)
a) einen mindestens eine Seitenfläche (22, 24a, 24b) aufweisenden Verbinder (12) zum Verbinden mit mindestens einer Platte (16a, 16b) an einer Unterseite (20) des Verbinders (12) und
b) eine Schweißlasche (14), die mit dem Verbinder (12) elektrisch leitend verbunden ist, aufweist, und
(ii) Verbinden der beiden Batteriezellenverbindungselemente (10) so, dass eine von einer Berandung (28) begrenzte Ausnehmung (26) entsteht, wobei die Berandung (28) an einem der Seitenfläche (22, 24a, 24b) des Verbinders (12) benachbarten Abschnitt (30) einen Verlauf aufweist, der einer Kontur der Seitenfläche des Verbinders (12) entspricht.

13. Verfahren nach Anspruch 12, **dadurch gekennzeichnet, dass** das Verbinden ein Verschweißen ist.

14. Verfahren nach Anspruch 13, **dadurch gekennzeichnet, dass** beim Verschweißen die Berandung (28) an einem der Seitenfläche (22, 24a, 24b) des Verbinders (12) benachbarten Abschnitt (30) nach unten weist.

15. Verfahren nach einem der Ansprüche 13 oder 14, **dadurch gekennzeichnet, dass** die Berandung (28) zwei aneinander angrenzende, geradlinig verlaufende Abschnitte (30a, 30b) aufweist, die miteinander eine Ecke bilden und beim Verbinden der beiden Batteriezellenverbindungselemente (10) die Ecke den höchstliegenden Punkt der Ausnehmung (26) darstellt.

## Claims

1. A battery, particularly a lead accumulator, with at least one battery cell connection element (10) that comprises
a) a connector (12), having at least one side surface (22, 24a, 24b), the connector to be connected with at least one panel (16a, 16b) on an underside (20) of the connector (12) and
b) a welding bridge (14) that is connected electro-conductively to the connector (12) and has a recess (26) that is bordered by a boundary (28),
**characterised by the fact that** the boundary (28) has a part (30) with a shape, the part (30) neighbouring one of the side surfaces (22, 24a, 24b) of the connector (12), the shape corresponds with a contour of the side surface (22, 24a, 24b) of the connector (12).

2. The battery according to claim 1, **characterised by** the boundary (28) running at least partially straight.

3. The battery according to one of the preceding claims, **characterised by** the boundary (28) having two parts (30a, 30b) that run straight and neighbour each other.

4. The battery according to one of the preceding claims, **characterised by** the boundary (28) running mainly equidistant to the contour of the side surface (22, 24a, 24b) in a part (30) neighbouring the side surface of the connector (12).

5. The battery according to claim 4, **characterised by** the boundary (28) running mainly equidistant to the contour of the side surface (22, 24a, 24b) in all parts (30) neighbouring the side surface (22, 24a, 24b) of the connector (12).

6. The battery according to one of the preceding claims, **characterised by** the connector (12) having a mainly rectangular prism-shaped form and the welding bridge (14) being positioned on a transverse side (18a, 18b) of the connector (12).

7. The battery according to claim 6, **characterised by** the recess (26) being arranged laterally next to the projection area that is obtained by projection of the cross-section of the connector (12) in its longitudinal direction onto the welding bridge (14).

8. The battery according to claim 6 and/or 7, **characterised by** the recess (26) being arranged over the projection area that is obtained by projection of the cross-section of the connector (12) in its longitudinal direction onto the welding bridge (14).

9. The battery according to one of the claims 1 to 5, **characterised by** the connector (12) having a mainly rectangular prism-shaped form and the welding bridge (14) being arranged on a longitudinal side (24a, 24b) of the connector (12).

10. The battery according to one of the preceding claims, **characterised by** two battery cell connection elements (10) that are separated from each other by an electrically isolating partition wall (36) and that are symmetrical to the partition wall (36), the battery cell connection elements (10) being connected electrically with each other through a provided partition wall recess in the partition wall (36)

11. The battery according to one of the preceding claims, **characterised by** the fact that at least one panel (16a, 16b) is formed to the underside (20) of the connector (12).

12. A method to produce a battery (11), particularly a lead accumulator, with the steps:
(i) arrangement of two battery cell connection elements (10) on each side of a partition wall (36), each battery cell connection element (10) comprising
a) a connector (12), having at least one side surface (22, 24a, 24b), to be connected with at least one panel (16a, 16b) on an underside (20) of the connector (12) and
b) a welding bridge (14) that is connected electro-conductively to the connector (12) and
(ii) connection of the two battery cell connection elements (10) in such a way that a recess (26) develops that is limited by a boundary (28), the boundary (28) having a shape on a part (30) neighbouring the side surface (22, 24a, 24b) of the connector (12), the shape corresponding to the contour of the side surface of the connector (12).

13. The method according to claim 12, **characterised in** the connection being a welding.

14. The method according to claim 13, **characterised in** the fact that, in the process of welding, the boundary (28) points downwards on an area (30) neighbouring the side surface (22, 24a, 24b) of the connector (12).

15. The method according to one of the claims 13 or 14, **characterised by** the boundary (28) having two parts (30a, 30b) that neighbour each other and run straight, and form a corner with each other and, when connecting the two battery cell connection elements (10), the corner becomes the highest point of the recess (26).

## Revendications

1. Batterie, en particulier accumulateur au plomb, comprenant au moins un élément de liaison de cellules de batterie (10) qui comprend
(a) un organe de liaison (12), présentant au moins une face latérale (22, 24a, 24b) pour la liaison avec au moins une plaque (16a, 16b) sur une face inférieure (20) de l'organe de liaison (12), et
(b) une languette à souder (14), qui est reliée à l'organe de liaison (12) de manière à conduire électricité et comporte un évidement (26) délimité par une bordure (28),
**caractérisée en ce que** la bordure (28) présente, dans un tronçon (30) voisin de la face latérale (22, 24a, 24b) de l'organe de liaison (12), un tracé qui correspond à un contour de la face latérale (22, 24a, 24b) de l'organe de liaison (12).

2. Batterie selon la revendication 1, **caractérisée en ce que** la bordure (28) s'étend en ligne droite par tronçons.

3. Batterie selon l'une des revendications précédentes, **caractérisée en ce que** la bordure (28) comporte deux tronçons (30a, 30b) mutuellement adjacents et s'étendant en ligne droite.

4. Batterie selon l'une des revendications précédentes, **caractérisée en ce que** la bordure (28) s'étend, dans un tronçon (30) voisin de la face latérale (22, 24a, 24b) de l'organe de liaison (12), sensiblement de manière équidistante par rapport au contour de la face latérale (22, 24a, 24b).

5. Batterie selon la revendication 4, **caractérisée en ce que** la bordure (28) s'étend, dans tous les tronçons (30) voisins de la face latérale (22, 24a, 24b) de l'organe de liaison (12), sensiblement de manière équidistante par rapport au contour de la face latérale (22, 24a, 24b).

6. Batterie selon l'une des revendications précédentes, **caractérisée en ce que** l'organe de liaison (12) a une configuration sensiblement parallélépipédique, et la languette à souder (14) est agencée sur un côté transversal (18a, 18b) de l'organe de liaison (12).

7. Batterie selon la revendication 6, **caractérisée en ce que** l'évidement (26) est agencé latéralement à côté de la surface de projection qui est obtenue par projection de la section transversale de l'organe de liaison (12) dans sa direction longitudinale sur la languette à souder (14).

8. Batterie selon la revendication 6 et/ou 7, **caractérisée en ce que** l'évidement (26) est agencé au-dessus de la surface de projection qui est obtenue par projection de la section transversale de l'organe de liaison (12) dans sa direction longitudinale sur la languette à souder (14).

9. Batterie selon l'une des revendications 1 à 5, **caractérisée en ce que** l'organe de liaison (12) a une configuration sensiblement parallélépipédique et la languette à souder (14) est agencée sur un côté longitudinal (24a, 24b) de l'organe de liaison (12).

10. Batterie selon l'une des revendications précédentes, **caractérisée par** deux éléments de liaison de cellules de batterie (10), séparés l'un de l'autre par une paroi de séparation (36) électriquement isolante et symétriques par rapport à la paroi de séparation (36), ces éléments étant reliés électriquement l'un à l'autre à travers un évidement ménagé dans la paroi de séparation (36).

11. Batterie selon l'une des revendications précédentes, **caractérisée en ce qu'**au moins une plaque (16a, 16b) est conformée sur la face inférieure (20) de l'organe de liaison (12).

12. Procédé pour fabriquer une batterie (11), en particulier un accumulateur au plomb, comprenant les étapes consistant à :
(i) agencer deux éléments de liaison de cellules de batterie (10) des deux côtés d'une paroi de séparation (36), tels que chaque élément de liaison de cellules de batterie (10) comprend
(a) un organe de liaison (12) présentant au moins une face latérale (22, 24a, 24b) pour la liaison avec au moins une plaque (16a, 16b) sur une face inférieure (20) de l'organe de liaison (12), et
(b) une languette à souder (14) qui est reliée à l'organe de liaison (12) de manière à conduire électricité, et
(ii) lier les deux éléments de liaison de cellules de batterie (10) de telle façon qu'il en résulte un évidement (26) délimité par une bordure (28), ladite bordure (28) présentant, au niveau d'un tronçon (30) voisin de la face latérale (22, 24a, 24b) de l'organe de liaison (12), un tracé qui correspond à un contour de la face latérale de l'organe de liaison (12).

13. Procédé selon la revendication 12, **caractérisé en ce que** l'étape de liaison est un soudage.

14. Procédé selon la revendication 13, **caractérisé en ce que** lors du soudage, la bordure (28) sur un tronçon (30) voisin de la face latérale (22, 24a, 24b) de l'organe de liaison (12) est dirigée vers le bas.

15. Procédé selon l'une des revendications 13 ou 14, **caractérisé en ce que** la bordure (28) présente deux tronçons (30a, 30b) mutuellement voisins et s'étendant en ligne droite, qui forment l'un avec l'autre un coin et, lors de la liaison des deux éléments de liaison de cellules de batterie (10), le coin représente le point le plus haut de l'évidement (26).
